# FASCICULE DE BREVET EUROPEEN

(11) **EP 1 148 964 B1**
(45) Date de publication et mention de la délivrance du brevet: **12.06.2002**
(21) Numéro de dépôt: 00901674.2
(22) Date de dépôt: 28.01.2000
(51) Int. Cl.: B23C 3/05

(54) **OUTILLAGE A PLAQUETTE INTERCHANGEABLE POUR L'USINAGE DE SIEGES PROFILES**
WERKZEUGGERÄT MIT AUSWECHSELBAREM SCHNEIDEINSATZ ZUM BEARBEITEN VON PROFILIERTEN VENTILSITZEN
TOOLING OUTFIT WITH INTERCHANGEABLE INSERT FOR MACHINING PROFILED SEATS

(30) Priorité: 03.02.1999 FR 9901423
(43) Date de publication de la demande: 31.10.2001
(73) Titulaire: MACHINES SERDI, 74000 Annecy (FR)
(72) Inventeur: GRUBER, Philippe, CH-1063 Grandvaux (CH); VIELLARD, Renaud, F-74380 Lucinges (FR)
(74) Mandataire: Perrier, Jean-Pierre
(86) Numéro de dépôt international: FR0000207
(87) Numéro de publication internationale: WO0045984

(56) Documents cités:
- FR-A- 2 766 745
- US-A- 3 728 940

## Description

L'invention est relative à un outillage à plaquette interchangeable et à une plaquette interchangeable selon le préambule des revendications 1 et 4 pour l'usinage de portées profilées et par exemple des sièges de soupapes de moteurs thermiques.

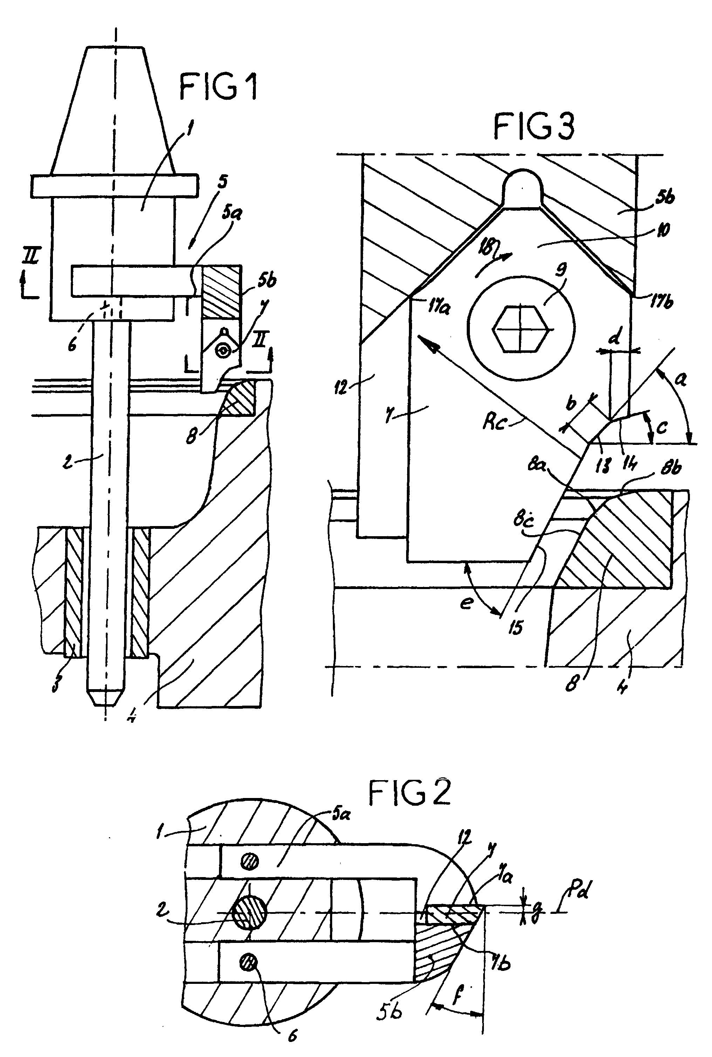

Actuellement, un tel usinage est assuré par une machine spéciale équipée d'une broche motorisée dans laquelle est monté un porte-outil. Le porte-outil 1, représenté sur la figure 1 annexée, est équipé d'une part, d'un pilote axial 2 le positionnant dans le guide de soupape 3 d'une culasse 4 et, d'autre part, d'un porte plaquette 5 comprenant deux branches 5a visibles figure 2. Celles-ci sont montées coulissantes dans le porte-outil avec possibilité de blocage dans celui-ci par des vis 6. Un bras 5b, sensiblement parallèle à l'axe de rotation de la broche, porte une plaquette 7, amovible et multiarêtes, assurant l'usinage d'un siège 8. La figure 3 montre que, dans les porte-outils actuels, la plaquette 7 comporte un talon en coin 10 et est fixée, par une vis 9, sur une face plane 12 qui, comme montré figure 2, est parallèle à un plan diamétral Pd du porte-outil.

Le profil de coupe de la plaquette 7est adapté à la forme du siège qu'il faut usiner et est défini par au moins cinq paramètres, à savoir, et comme montré à la figure 3 :
- l'angle a de l'arête de coupe principale 13 assurant l'usinage de la portée conique 8a sur laquelle vient s'appuyer la soupape et constituant donc le siège de soupape proprement dit,
- la largeur b de ce siège,
- l'angle c de l'arête de coupe 14 du dégagement supérieur 8b du siège 8,
- la largeur d de cette arête,
- et l'angle e de l'arête de coupe 15 du dégagement inférieur 8c du siège.

En raison de la diversité des sièges de soupapes, il existe plusieurs milliers de type de plaquettes, de sorte que celles-ci sont personnalisées à partir d'ébauches, par exemple en carbure de tungstène fritté, dont la mise au profil est effectuée à la demande. Cette mise au profil comprend aussi la formation de l'angle de dépouille f, montré à la figure 2.

Pour permettre le réaffûtage ultérieur des arêtes de coupe de ces plaquettes, et cela sans avoir recours à une machine d'affûtage spéciale, les deux grandes faces, respectivement, frontale 7a et dorsale 7b, des plaquettes sont planes et parallèles. Cela permet d'affûter les arêtes de coupe par meulage de la face frontale 7a. Enfin, pour éviter que cet affûtage déplace les arêtes de coupe au-delà du plan diamétral Pd, il est d'usage que la face d'appui 12 du porte plaquette soit positionnée de manière que les arêtes de coupe d'une plaquette neuve soient en-deça de ce plan diamétral, c'est à dire en avant, d'une valeur de l'ordre de 0,5 à 0,8 mm, comme montré par la valeur g à la figure 2.

Ce mode de rénovation, qui a donné satisfaction jusqu'alors, parvient à ses limites en raison, d'une part, de l'augmentation de la dureté des sièges et, d'autre part, de l'impossibilité d'utiliser les vitesses de coupe élevées permises par les plaquettes en carbure.

En effet, pour mieux résister aux additifs des carburants actuels, les sièges de soupapes sont fabriqués dans des alliages de plus en plus durs et ayant une mauvaise usinabilité, tels que alliages à base de carbone, de chrome, de vanadium, de nickel, de silicium, de manganèse.

Par ailleurs, la dureté superficielle des sièges est accrue par le matage du siège par la soupape et par l'accroissement des températures des gaz d'échappement. Cet accroissement de la dureté ne peut pas être compensé par une augmentation de la vitesse de coupe, comme cela est connu dans d'autres domaines, et cela pour les raisons suivantes :
- la rénovation des sièges s'effectue à sec et le pilote qui tourne dans le guide soupape, avec un faible jeu, risque de gripper s'il est entraîné à de hautes vitesses,
- la structure portant l'outil n'est pas adaptée à ces vitesses et, en particulier, manque de rigidité, notamment lorsque les efforts de coupe sont importants en raison de la longueur des profils de coupe.

Ce manque de rigidité provient de l'éloignement vertical du porte plaquette par rapport aux paliers de guidage de la broche motorisée, mais aussi du montage de la plaquette sur le porte plaquette et du montage du porte plaquette sur le porte-outil, les effets de ce dernier étant accrus par le décalage radial du porte plaquette par rapport à l'axe de rotation de la broche.

La figure 3 montre que, dans les montages actuels, la résultante Rc des réactions aux efforts de coupe s'exerçant sur les diverses arêtes de coupe 13, 14 et 15, est bien souvent extérieure à l'appui 17a du talon de la plaquette sur le porte plaquette. Si, comme montré à cette figure, les tolérances de fabrication, respectivement, des angles du talon et des angles des faces du porte plaquette servant d'appui au talon, sont à leurs limites de valeur, c'est-à-dire sont dans des conditions défavorables, le talon ne porte que sur deux points 17a, 17b et peut permettre le pivotement de la plaquette dans le sens de la flèche 18, sous le couple qui lui est communiqué par la résultante Rc. Cela a pour conséquence de modifier la position des arêtes de coupe en altérant la précision, mais aussi de favoriser les vibrations et l'altération de l'état de surface des faces usinées. On notera que ce pivotement est d'autant plus aisé que le dos de la plaquette s'appuie sur une face plane.

DE-A-4 124 646 décrit un outillage à outil interchangeable pour l'usinage de parties profilées dans lequel chaque outil, d'une part, porte deux plaquettes opposées scellées sur lui, et d'autre part, présente un talon droit et des faces d'appui, parallèles entre elles et à l'axe longitudinal de la plaquette, ces faces délimitant, en section transversale, un profil dorsal en "V" complémentaire de celui réalisé dans un berceau du porte-outil contre lequel ledit outil est fixé par une vis le traversant.

Ce montage de l'outil dans le porte-outil améliore la rigidité de leur liaison mais complique le réaffûtage des plaquettes scellées sur l'outil. Par ailleurs avec ce profil d'outil, et que l'opération de réaffûtage soit réalisée sur la face de coupe ou sur la face en dépouille, cette opération entraîne systématiquement la modification du profil de coupe, donc du profil du siège usiné.

La présente invention a pour objet de remédier à ces inconvénients en fournissant un outillage dans lequel le positionnement et la fixation de la plaquette sur le porte plaquette augmentent la rigidité et garantissent le positionnement géométrique du profil de coupe, aussi bien après le premier affûtage qu'après réaffûtage, donc garantissent la précision d'usinage de la partie profilée, tout en permettant de réaffûter plusieurs fois une même plaquette par les moyens habituels, simples, peu onéreux et à la disposition de tout atelier d'usinage mécanique.

A cet effet, dans l'outillage selon l'invention, le berceau du porte plaquette est en forme de trièdre rectangle et est incliné transversalement par rotation autour d'un axe correspondant à une génératrice de la portée conique du siège devant être réalisé, tandis que les arêtes de coupe de la plaquette sont réalisées dans une ébauche comportant trois faces d'appui formant un trièdre rectangle, à savoir la face dorsale, une face longitudinale et la face postérieure, et dont l'autre face longitudinale et la face antérieur restant à l'état brut, sont en dépouille à partir de la face frontale, l'arête de coupe principale étant réalisée de manière que son point milieu coïncide avec un point de référence de l'axe d'inclinaison et situé sur cet axe à une distance constante du sommet du trièdre du berceau.

Avec cet agencement, lorsque la plaquette est positionnée dans son berceau et est fixée par une vis traversante, l'appui de ses trois faces d'appui contre les faces du trièdre du berceau, sous l'action des composantes horizontales de la force de serrage de la vis, assure le parfait positionnement de la plaquette et de son arête de coupe.

Grâce à la face longitudinale du berceau qui s'étend sur presque toute la longueur de la plaquette, la résultante des réactions aux efforts de coupe est toujours située entre les zones d'appui de la plaquette et ne tend donc pas à la faire pivoter autour de sa fixation, ce qui garantit le bon positionnement des arêtes de coupe.

En outre, l'inclinaison du berceau présente l'avantage, tout en utilisant des plaquettes à faces, respectivement, frontale et dorsale parallèles, donc des plaquettes aisément réaffûtables, de donner, au tranchant de l'arête de coupe principale, une inclinaison procurant une pente d'affûtage, sans que cela modifie la position dans l'espace de cette arête privilégiée, donc la géométrie de l'usinage de la portée correspondante.

On notera que, si les autres arêtes de coupe, non privilégiées, ont une position dans l'espace qui est modifiée, en raison de leur pivotement autour de l'arête de référence et non autour de leur propre arête, ces modifications ne sont pas de nature à dépasser les tolérances de fabrication, en général plus larges, accordées aux portées qu'elles sont destinées à usiner.

Le fait de donner de la pente d'affûtage en inclinant transversalement le berceau permet de réduire les efforts de coupe, et, en conséquence, les efforts de réaction affectant la rigidité du porte plaquette et du porte-outil, mais aussi et surtout celle du fourreau de broche par rapport aux roulements de broche.

Enfin, le positionnement précis, dès l'usinage d'adaptation de l'ébauche, du point milieu de l'arête de coupe principale, permet de garantir la précision de l'usinage par la plaquette, tout en réduisant le nombre de modèle de porte plaquette, ceux-ci ne se différenciant alors que par l'angle d'inclinaison, par rapport à l'axe de rotation du porte outil, de la génératrice de la portée principale du siège devant être usiné.

Dans une forme d'exécution de l'invention, le berceau est muni, dans au moins les deux arêtes inférieures de son trièdre, d'une rainure de dégagement, tandis que les arêtes inférieures du trièdre de la plaquette sont cassées par un chanfrein venant de frittage.

Cet aménagement permet, malgré la suppression de l'usinage des faces longitudinale et postérieure assurant l'appui de la plaquette, de garantir la qualité du positionnement de cette plaquette par le berceau.

L'invention concerne aussi une plaquette interchangeable multiarêtes de coupe pour l'usinage de sièges de soupapes dans laquelle les arêtes de coupe sont réalisées au cas par cas par rectification dans une ébauche universelle, par exemple en carbure de tungstène fritté, préalablement rectifiée sur ses deux grandes faces parallèles, respectivement dorsale et frontale, et comportant un alésage traversant pour le passage d'une vis de fixation, à tête conique.

Selon l'invention, les arêtes de coupe sont réalisées dans une ébauche ayant, vu de dessus, la forme d'un trapèze rectangle et, dans une zone qui, délimitée entre deux faces brutes de frittage, et en dépouille, respectivement longitudinale et antérieure, est diagonalement opposée à un trièdre rectangle de positionnement formé dans cette plaquette par une face longitudinale, une face postérieure et la face dorsale.

D'autres caractéristiques et avantages ressortiront de la description qui suit en référence au dessin schématique annexé représentant, à titre d'exemple, une forme d'exécution de l'outillage selon l'invention.
Figure 1 est une vue partielle, avec coupe partielle, montrant un porte-outil de l'état de la technique, lorsqu'il est en place dans une culasse pour rénover un siège,
Figure 2 est une vue en coupe suivant II-II de figure 1 montrant, à échelle agrandie, le porte plaquette de l'état de la technique,
Figure 3 est une vue partielle en coupe transversale montrant, à échelle encore plus agrandie, la forme particulière des plaquettes d'usinage de l'état de la technique,
Figure 4 est une vue en perspective, à échelle agrandie, d'une forme d'exécution d'une ébauche de la plaquette, selon l'invention,
Figure 5 est une vue en perspective du porte plaquette, selon l'invention, sans la plaquette,
Figure 6 est une vue partielle, de face en élévation, du porte plaquette équipée d'une plaquette,
Figure 7 est une vue partielle en coupe suivant VII-VII de figure 6 montrant, à échelle agrandie, le positionnement de l'arête de coupe principale par rapport au plan médian diamétral du porte plaquette,
Figure 8 est une vue partielle montrant en perspective et à échelle agrandie, le berceau du porte plaquette,
Figure 9 est une vue partielle en coupe montrant, à échelle agrandie, la cuvette ménagée dans la plaquette pour l'appui de la tête de vis de fixation.

L'outillage selon l'invention, est donc composé, comme dans l'état de la technique, d'un porte plaquette 20 et d'une plaquette 21. Le porte plaquette est composé d'un corps 20a, solidaire de deux branches transversales 20b aptes à coopérer avec le porte outil 1, et d'un bras sensiblement longitudinal 20c, saillant vers le bas et comportant un berceau 22, apte à recevoir et positionner la plaquette 21.

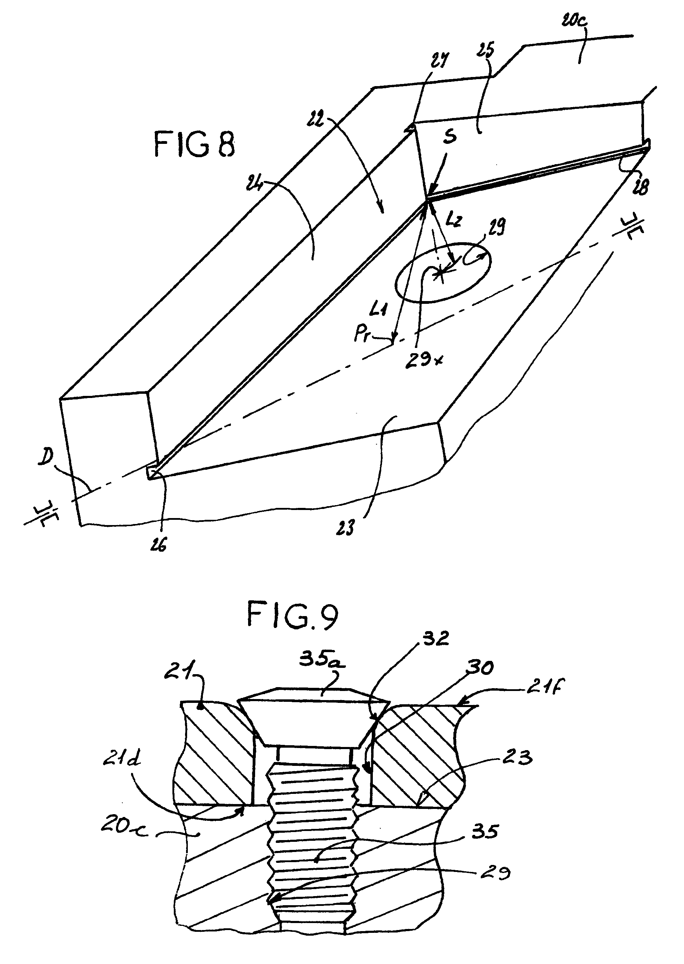

Selon l'invention, et comme montré plus en détails aux figures 5 et 8, ce berceau 22 est en forme de trièdre rectangle délimité par trois faces perpendiculaires deux à deux, à savoir une face de fond 23, une face longitudinale 24 et une face antérieure 25. L'ensemble du berceau est incliné par rapport à un axe D qui correspond à l'une des génératrices de la portée conique devant être usinée avec le porte plaquette et qui est donc incliné par rapport à l'axe de rotation du porte outil de la même valeur angulaire que la portée conique du siège devant être réalisé. A la figure 8, la référence Pr désigne un point de référence de cet axe d'inclinaison. Ce point est à une distance L1 du sommet S du trièdre d'appui du berceau 22.

La figure 8 montre que les arêtes du trièdre sont remplacées par des rainures de dégagement, respectivement 26, entre les faces 23 et 24, 27, entre les faces 24, et 25, et 28 entre les faces 23 et 25.

De la face de fond 23 débouche un alésage fileté 29 dont l'axe longitudinal 29 est orthogonal à cette face et est à une distance L2 du sommet S du trièdre.

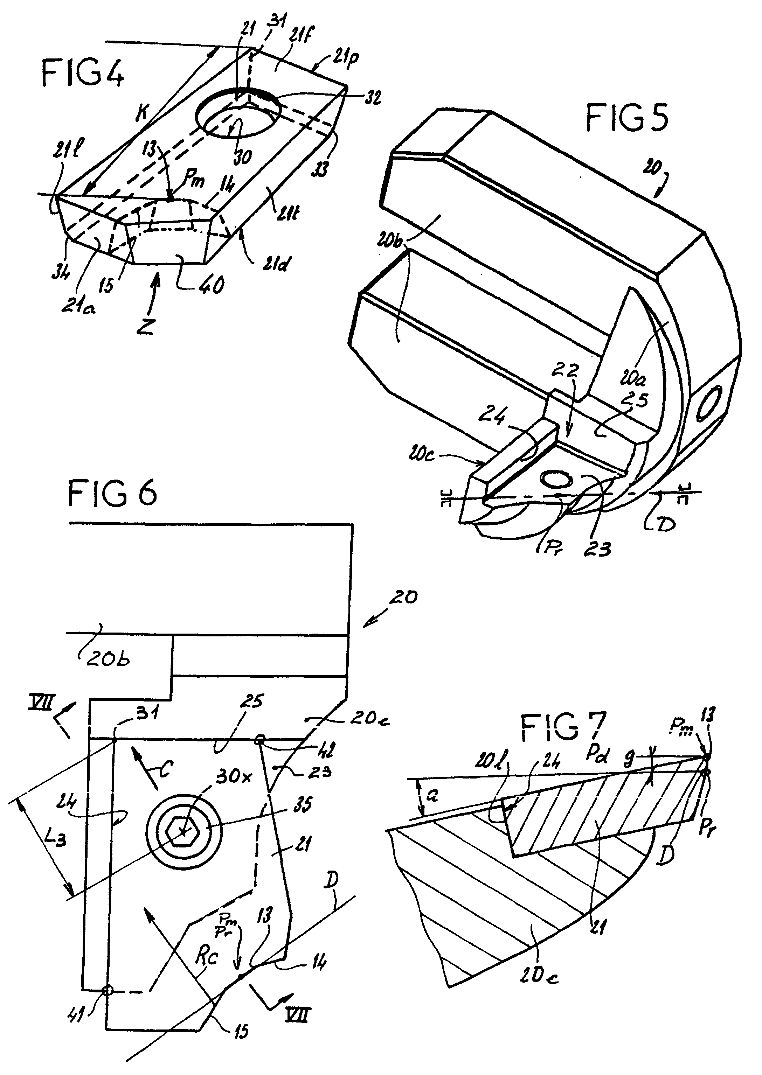

Comme montré figure 4, la plaquette 21 est réalisée à partir d'une ébauche, par exemple en carbure de tungstène fritté, comportant :
- deux grandes faces parallèles, à savoir une face dorsale 21d, et une face frontale 21f,
- trois faces d'appui déterminant un trièdre rectangle, c'est à dire perpendiculaires deux à deux, à savoir la face dorsale 21d, une face longitudinale 21l, et une face antérieure 21a,
- et deux faces en dépouille, à partir de la face frontale 21f, à savoir la face antérieure 21a, et l'autre face longitudinale 21t.

La figure 4 montre que la face longitudinale 21t va en s'écartant de l'autre face longitudinale 21l, en allant de la face postérieure 21p à la face antérieure 21a, en donnant à la plaquette une forme trapézoïdale rectangle en vue de dessus.

La plaquette 21 est traversée par un alésage lisse 30, avec une cuvette d'appui 32 pour la tête conique 35a d'une vis 35 (figure 6). Comme montré figure 6, l'axe longitudinal 30x de cet alésage 30 est orthogonal aux grandes faces, respectivement dorsale 21d et frontale 21f de la plaquette 21, et est situé à une distance L3 de l'arête 31 de la plaquette, donc du sommet de son trièdre. La différence L3 - L2 est de l'ordre de 0,08 à 0,025 mm, donc de quelques dixièmes de millimètre.

Par ailleurs, et comme le montre la figure 9, la cuvette 32 présente, dans sa partie recevant l'appui de la tête 35a de la vis, une face d'appui convexe formée par un arrondi. Grâce à cela, la tête conique 35a de la vis 35 prend toujours appui sur la plaquette 21 par un cercle continu et tout porte-à-faux est supprimé. En outre, l'excentration vis 35-alésage 30 (L3 - L2) procure une composante transversale plaquant le trièdre de la plaquette 21 dans celui du berceau 22.

La figure 4 montre que la zone Z dans laquelle sont réalisées les arêtes de coupes est diagonalement opposée au trièdre d'appui de la plaquette et est délimitée entre les faces, respectivement, longitudinale 21t et antérieure 21a. L'arête principale 13, assurant l'usinage du siège proprement dit, et les arêtes 14 et 15 formant les dégagements, respectivement supérieur et inférieur, représentées en traits mixtes à la figure 4, sont réalisées au cas par cas par rectification, après que les deux faces, respectivement frontale 21f et dorsale 21d, aient été rectifiées pour garantir leur parfait parallélisme.

Pour réduire les pertes de matière et les coûts de fabrication et d'usinage, la zone Z de chaque plaquette présente un pan 40 tronquant l'angle.

Lors de la réalisation de l'arête principale 13, celle-ci est positionnée dans l'ébauche de manière que son point milieu Pm (figure 4) soit à une distance constante K de l'arête 31 formée entre la face postérieure 21p et la face longitudinale d'appui 21I.

Chacune des arêtes inférieures de la plaquette, c'est-à-dire celles formées entre la face dorsale 21d et, respectivement, la face postérieure 21p et la face longitudinale 21l, est cassée par un chanfrein, respectivement, 33 et 34, venant de frittage.

Enfin, au moins la partie inférieure du berceau 22 est moins large que la plaquette 21, de manière que, lorsque cette plaquette est posée sur celui-ci, elle en déborde à l'opposé de sa face longitudinale d'appui 24, et sur la plus grande partie de sa longueur.

Il ressort de ce qui précède que, en raison de sa forme simple, l'ébauche est très facile à réaliser, et est donc peu onéreuse et surtout présente des caractéristiques géométriques stables qui permettent de l'utiliser sans usinages, autres que ceux nécessaires à la formation des arêtes de coupe. Cela permet donc de poser ces faces d'appui à l'état brut dans le berceau trièdrique.

Lorsque la plaquette est posée, ces faces d'appui viennent en contact avec celles en vis à vis du berceau et cela d'autant plus aisément que les arêtes pouvant perturber ce positionnement sont remplacées par les chanfreins 33 et 34 et par les rainures de dégagement 26 à 28. Lorsque la vis 35 est serrée, l'appui de sa tête conique sur la cuvette 32 de la plaquette génère, sur la plaquette, et grâce à l'excentration L3 - L2, une composante transversale C qui tend à plaquer les faces d'appui, respectivement, postérieure 21p et latérale 21l, contre les faces correspondantes 24 et 25 du berceau et à garantir le positionnement de cette plaquette, donc de ses arêtes de coupe.

Grâce à ce positionnement, le point Pm de l'arête de coupe 13 vient en coïncidence avec le point de référence Pr de l'axe d'inclinaison D, à moins que, comme montré à la figure 7 correspondant au positionnement d'une plaquette neuve dont les arêtes de coupe sont en avant du plan diamétral Pd, le point Pm vienne sensiblement se superposer sur le point Pr.

Il est précisé que le décalage g à la figure 7 est volontairement exagéré et qu'en pratique le décalage radial entre les points Pm et Pr est insuffisant pour modifier, au-delà des valeurs acceptées, la position de l'arête de coupe principale 13, et par exemple est de l'ordre de 0,5 mm.

La figure 7 montre que l'inclinaison du berceau autour de l'axe d'inclinaison D, suivant un angle a ayant une valeur comprise entre 6 et 15°, procure à l'arête 13 une pente d'affûtage qui permet de réduire l'effort de coupe, donc les efforts sollicitant la plaquette, les matages pouvant amenuiser sa rigidité, mais aussi de réduire la puissance nécessaire à l'usinage.

Enfin, la figure 6 montre que, grâce au positionnement précis des arêtes de coupe, la résultante Rc des réactions aux efforts de coupe, définies dans le préambule, est entre les points d'appui extrêmes 41, 42 de la plaquette sur le berceau 22, et, en conséquence, n'a pas tendance à faire basculer ou pivoter la plaquette.

Il ressort de ce qui précède que le porte plaquette et la plaquette selon l'invention, constituent un outillage qui améliore considérablement les conditions d'usinage des portées cylindriques profilées, et permet, même avec les matériaux les plus résistants, de travailler dans de meilleures conditions de précision et d'état de surface, tout en améliorant la précision du centrage de l'usinage par rapport à l'axe virtuel du siège.

L'outillage, qui a été décrit dans le cas de son application à l'usinage et à la rénovation des sièges de soupape avec positionnement de la broche au moyen d'une tige pilote, s'applique bien entendu à tout autre usinage, avec ou sans positionnement par une tige pilote et mettant en oeuvre une plaquette interchangeable fixée dans un porte plaquette, réglable ou non, c'est-à-dire rapporté sur un porte outil ou formé dans le porte outil.

De même, la formation de la pente d'affûtage par basculement du berceau s'applique à toute plaquette dont le profil de coupe est défini par une ou plusieurs arêtes de coupe et dont l'une de ces arêtes peut être privilégiée pour définir l'axe de basculement.

## Revendications

1. Outillage à plaquette interchangeable pour l'usinage de sièges de soupape comprenant un porte plaquette (20) se montant avec possibilité de réglage radial, sur le porte outil (1) d'une broche motorisée, ce porte plaquette présentant un bras inférieur (20c), sensiblement longitudinal, portant un berceau (22) pour une plaquette interchangeable (21), outillage dans lequel la plaquette d'usinage (21) comporte, à une extrémité, au moins une arête de coupe principale (13) pour la réalisation de la partie conique du siège, et, éventuellement, des arêtes de coupe (14, 15) réalisant des dégagements, respectivement supérieur et inférieur, et, à l'autre extrémité, une face d'appui (21p) orthogonale à l'axe longitudinal de la plaquette, ladite plaquette présentant des faces, respectivement dorsale (21d) et frontale (21f) parallèles, et étant fixée sur le berceau (22) par une vis transversale (35) à tête conique, **caractérisé en ce que** le berceau (22) du porte plaquette (20) est en forme de trièdre rectangle et est incliné transversalement par rotation autour d'un axe (D) correspondant à une génératrice de la portée conique du siège devant être réalisé, tandis que les arêtes de coupe (13 à 15) de la plaquette (21) sont réalisées dans une ébauche comportant trois faces d'appui formant un trièdre rectangle, à savoir la face dorsale (21d), une face longitudinale (21I) et la face postérieure (21p), et dont l'autre face longitudinale (21t) et la face antérieure (21a), restant à l'état brut, sont en dépouille à partir de la face frontale (21f), l'arête de coupe principale (13) étant réalisée de manière que son point milieu (Pm) coïncide avec un point de référence (Pr) de l'axe d'inclinaison (D) et situé sur cet axe à une distance constante du sommet du trièdre du berceau (22).

2. Outillage selon la revendication 1, **caractérisé en ce que** le berceau (22) est muni, dans au moins les deux arêtes inférieures de son trièdre, d'une rainure de dégagement (26 à 28), tandis que les arêtes inférieures du trièdre de la plaquette (21) sont cassées par un chanfrein venant de frittage (33, 34).

3. Outillage selon la revendication 1, **caractérisé en ce que** la distance (L3) entre l'axe longitudinal de l'alésage de la plaquette et le sommet du trièdre de positionnement de cette plaquette est supérieure de quelques dixièmes de millimètre à la distance (L2) entre, d'une part, l'axe longitudinal de l'alésage fileté ménagé dans le porte-plaquette pour la vis transversale de fixation de la plaquette, et d'autre part, le sommet (S) du trièdre du porte-plaquette.

4. Plaquette interchangeable multiarêtes de coupe pour l'usinage de sièges de soupapes dans laquelle les arêtes de coupe sont réalisées au cas par cas par rectification dans une ébauche universelle, par exemple en carbure de tungstène fritté, préalablement rectifiée sur ses deux grandes faces parallèles, respectivement dorsale (21d) et frontale (21f), et comportant un alésage traversant pour le passage d'une vis de fixation (35), à tête conique (35a), **caractérisée en ce que** les arêtes de coupe (13 à 15) sont réalisées dans une ébauche ayant, vu de dessus, la forme d'un trapèze rectangle et, dans une zone (Z) qui, délimitée entre deux faces brutes de frittage, et en dépouille, respectivement longitudinale (21t) et antérieure (21a), est diagonalement opposée à un trièdre rectangle de positionnement formé dans cette plaquette par une face longitudinale (21I), une face postérieure (21p) et la face dorsale (21d).

5. Plaquette selon la revendication 4, **caractérisée en ce que,** dans chaque ébauche et plaquette (21), la face longitudinale dépouillée (21t) va en s'écartant de la face longitudinale d'appui (21l), en allant de la face postérieure (21p) à la face antérieure (21a).

6. Plaquette selon la revendication 4, **caractérisée en ce que** la face ménagée dans la plaquette (21) pour l'appui de la tête conique (35a) de la vis de fixation sur le berceau (22) présente une portée convexe formée par un arrondi.

7. Plaquette selon la revendication 4, **caractérisée en ce que** sa face longitudinale (21l) et la face postérieure (21t), délimitant le trièdre de positionnement de la plaquette, sont brutes de frittage.

## Patentansprüche

1. Werkzeug mit austauschbarer Platte zur Bearbeitung von Ventilsitzen, das einen Plattenhalter (20) umfasst, der mit der Möglichkeit der Radialeinstellung auf den Werkzeughalter (1) einer motorgetriebenen Spindel montiert ist, welcher Plattenhalter einen im Wesentlichen längs verlaufenden unteren Arm (20c) aufweist, der eine Aufnahme (22) für eine austauschbare Platte (21) trägt sowie ein ein Werkzeug, bei dem die Bearbeitungsplatte (21) an einem Ende mindestens eine Hauptschneidkante (13) zur Herstellung des konischen Teils des Sitzes und eventuell Schneidkanten (14,15) zur Herstellung eines jeweils oberen bzw. unteren Rücksprungs aufweist, und am anderen Ende eine zur Längsachse der Platte rechtwinklig angeordnete Anlagefläche (21p) umfasst, welche Platte jeweils auf der Rückseite (21d) und auf der Stirnseite (21f) zueinander parallele Flächen aufweist, und auf der Aufnahme (22) mittels einer quer angeordneten Senkkopfschraube (35) befestigt ist, **dadurch gekennzeichnet, dass** die Aufnahme (22) des Plattenhalters (20) die Form eines rechtwinkligen Trieders hat und durch Drehung um eine Achse (D) transversal geneigt ist, die einer Erzeugenden der konischen Auflagefläche des herzustellenden Sitzes entspricht, während die Schneidkanten (13 bis 15) der Platte (21) in einem Rohling hergestellt werden, der drei Anlageflächen umfasst, die einen rechtwinkligen Trieder bilden, und zwar die Rückfläche (21d), eine Längsfläche (21l) und die hintere Fläche (21p), und dessen andere Längsfläche (21t) und die vordere Fläche (21a), die im Rohzustand bleiben, ausgehend von der Stimfläche (21f) im Freiwinkel angeordnet sind, wobei die Hauptschneidkante (13) so ausgeführt ist, dass ihr Mittelpunkt (Pm) mit einem Bezugspunkt (Pr) der Neigungsachse (D) zusammenfällt und in konstantem Abstand vom Scheitel des Trieders der Aufnahme (22) auf dieser Achse gelegen ist.

2. Werkzeug nach Anspruch 1, **dadurch gekennzeichnet, dass** die Aufnahme (22) an mindestens den beiden unteren Kanten seines Trieders mit einer Freigabenut (26 bis 28) versehen ist, während die unteren Kanten des Trieders der Platte (21) mit einer Seitenfase (33, 34) versehen sind, die durch Sintem entstanden ist.

3. Werkzeug nach Anspruch 1, **dadurch gekennzeichnet, dass** der Abstand (L3) zwischen der Längsachse der Bohrung der Platte und dem Scheitel des Positionierungstrieders dieser Platte um einige Zehntelmillimeter größer ist als der Abstand (L2) zwischen einerseits der Längsachse der in dem Plattenhalter vorgesehenen Gewindebohrung für die quer verlaufende Befestigungsschraube der Platte und andererseits dem Scheitel (S) des Trieders des Plattenhalters.

4. Austauschbare Platte mit mehreren Schneidkanten zur Bearbeitung von Ventilsitzen, bei der die Schneidkanten je nach Bedarf durch Begradidung an einem Universal-Rohling hergestellt werden, beispielsweise aus gesintertem Wolframkarbid, der vorab an seinen beiden parallelen Hauptflächen, nämlich der Rückfläche (21d) und der Frontfläche (21f) begradigt wurde und eine durchgehende Bohrung zur Durchführung einer Befestigungsschraube (35) mit Senkkopf (35a) aufweist, **dadurch gekennzeichnet, dass** die Schneidkanten (13 bis 15) an einem Rohling hergestellt werden, der von oben gesehen die Form eines rechtwinkligen Trapezes hat, und in einer Zone (Z), die, von zwei durch Sintern entstandenen im Freiwinkel angeordneten Flächen begrenzt, nämlich der Längsfläche (21t) und der vorderen Fläche (21a), diagonal entgegengesetzt zu einem rechtwinkligen Positionierungstrieder angeordnet ist, der in dieser Platte von einer Längsfläche (21l), einer hinteren Fläche (21p) und der Rückfläche (21d) gebildet wird.

5. Platte nach Anspruch 4, **dadurch gekennzeichnet, dass** in jedem Rohling und jeder Platte (21) die längsseitige im Freiwinkel angeordnete Fläche (21t) so verläuft, dass sie sich von der hinteren Fläche (21p) zur vorderen Fläche (21a) hin von der längsseitigen Anlagefläche (21I) entfernt.

6. Platte nach Anspruch 4, **dadurch gekennzeichnet, dass** die in der Platte (21) für das Aufliegen des Senkkopfes (35a) der Befestigungsschraube an der Aufnahme (22) vorgesehene Fläche eine konvexe Auflagefläche aufweist, die von einer Rundung gebildet wird.

7. Platte nach Anspruch 4, **dadurch gekennzeichnet, dass** ihre Längsfläche (21I) und die hintere Fläche (21t), welche den Positionierungstrieder der Platte begrenzen, durch Sintem entstanden sind.

## Claims

1. A tool with an interchangeable insert for machining valve seats, comprising an insert holder (20) mountable, with the possibility of radial adjustment, on the tool holder (1) of a motorised arbor, this insert holder having a lower, substantially longitudinal, arm (20c) bearing a cradle (22) for an interchangeable insert (21), a tool in which the machining insert (21) comprises, at one end, at least one principal cutting edge (13) for producing the conical portion of the seat and, if required, cutting edges (14, 15) creating upper and lower reliefs respectively and, at the other end, a bearing surface (21p) orthogonal to the longitudinal axis of the insert, the said insert having respectively dorsal (21d) and frontal (21f) parallel faces and being fixed on the cradle (22) by a conical-head transverse screw (35), **characterised in that** the cradle (22) of the insert holder (20) is shaped like a right-angled trihedron and is transversely inclined by rotation about an axis (D) corresponding to a generatrix of the conical bearing surface of the seat to be produced, whereas the cutting edges (13 to 15) of the insert (21) are produced in a blank comprising three bearing surfaces forming a right-angled trihedron, namely the dorsal face (21d), a longitudinal face (21l) and the posterior face (21p), and of which the other longitudinal face (21t) and the anterior face (21a), remaining in the unmachined state, are tapered starting from the front face (21f), the principal cutting edge (13) being produced in such a way that its mid-point (Pm) coincides with a reference point (Pr) on the axis of inclination (D) and is located on this axis at a constant distance from the apex of the trihedron of the cradle (22).

2. A tool according to Claim 1, **characterised in that** the cradle (22) is provided, in at least the two lower edges of its trihedron, with a relief groove (26 to 28), whereas the lower edges of the trihedron of the insert (21) are chamfered due to sintering (33, 34).

3. A tool according to Claim 1, **characterised in that** the distance (L3) between the longitudinal axis of the bore of the insert and the apex of the positioning trihedron of this insert is a few tenths of a millimetre greater than the distance (L2) between, on the one hand, the longitudinal axis of the threaded bore provided in the insert holder for the insert-fixing transverse screw and, on the other hand, the apex (S) of the trihedron of the insert holder.

4. A multiple cutting-edge interchangeable insert for machining valve seats, in which the cutting edges are produced case by case, by grinding in a universal blank made, for example, of sintered tungsten carbide, the said blank having previously been ground on its two large parallel faces, respectively dorsal (21d) and frontal (21f), and comprising a through-bore for the passage of a fixing screw (35) with a conical head (35a), **characterised in that** the cutting edges (13 to 15) are produced in a blank which, when viewed from above, is shaped like a right-angled trapezium and, within a zone (Z) which, delimited between two as-sintered tapered surfaces - respectively longitudinal (21t) and anterior (21a) - is diagonally opposite a right-angled positioning trihedron formed in this insert by a longitudinal face (21I), a posterior face (21p) and the dorsal face (21a).

5. An insert according to Claim 4, **characterised in that** in each blank and insert (21), the tapered longitudinal face (21t) diverges from the longitudinal bearing surface (21l) during its course from the posterior face (21p) to the anterior face (21a).

6. An insert according to Claim 4, **characterised in that** the face provided in the insert (21) for supporting the conical head (35a) of the screw for fixation to the cradle (22) has a convex bearing surface formed by a rounded member.

7. An insert according to Claim 4, **characterised in that** its longitudinal face (21l) and the posterior face (21t), delimiting the positioning trihedron of the insert, are as sintered.
